# EUROPEAN PATENT APPLICATION

(11) **EP 1 708 442 A1**
(43) Date of publication of application: **04.10.2006**
(21) Application number: 06005363.4
(22) Date of filing: 16.03.2006
(51) Int. Cl.: H04L 12/58, H04M 1/725

(54) **Method for transmitting a message with an attachment comprising a photograph in a wireless terminal**

(30) Priority: 01.04.2005 KR 2005027657
(71) Applicant: Samsung Electronics Co., Ltd., Suwon-si, Gyeonggi-Do (KR)
(72) Inventor: Kim, Mi-Su, Yeongtong-gu Suwon-si Gyeonggi-do (KR); Yoo, Wi-Hyun, Yeongtong-gu Suwon-si Gyeonggi-do (KR); Choi, Seung-Chul, Yeongtong-gu Suwon-si Gyeonggi-do (KR)
(74) Representative: Lang, Johannes

(57) **Abstract**

Disclosed is a method for transmitting a message in a wireless terminal. The method includes the steps of checking a size of message contents to be transmitted when the message contents are input in a message writing mode, calculating an available data attachment capacity based on the size of the message contents, photographing an image to be attached to the message with a size (e.g., a number of pixels or bytes) within the available data attachment capacity and attaching the photographed image to the message, and transmitting the message with the attached image when a transmission key is operated.

## Description

### BACKGROUND OF THE INVENTION

### Field of the Invention:

The present invention relates to a method for transmitting a message in a wireless terminal. More particularly, the present invention relates to a method for generating data to be attached to a message with a capacity within an available data attachment capacity and transmitting the message by attaching the data thereto.

### Description of the Related Art:

A wireless terminal, which is generally used for voice communication, is also used for a short message service (SMS), which is being increasingly used. This is because a message service enables a desired message to be transmitted regardless of whether or not a counterpart wireless terminal is in communication (e.g., even if the counterpart wireless terminal is busy), and also because the message service can be provided at a lower cost than the voice communication. Additionally, recently, the function of a wireless terminal has been expanded more and more, so that Internet access has been made possible, and the user has also been able to photograph a desired image anywhere and anytime using a camera function included in the wireless terminal. Accordingly, a multimedia messaging service (MMS), which enables photographed or stored image data to be attached and transmitted in addition to the SMS, has been widely used. According to such an MMS, when an image data file is transmitted to a multimedia messaging service center (MMSC), which is an MMS management system of a wireless communication company, based on an MMS transmission standard and a transmission capacity prescribed by the wireless communication company, the MMSC receives and transmits the image data file to a called wireless terminal. When the MMS is used, if the size of an MMS message including an attached image data file exceeds the MMS transmission capacity prescribed by the wireless communication company, the user cannot transmit the MMS message.

Therefore, the user must limit the size of an MMS message to the MMS transmission capacity prescribed by the wireless communication company. However, when the user inputs contents of an MMS message and photographs and attaches a new image to the MMS message, the photographing may exceed the available data attachment capacity because the user cannot know the available data attachment capacity. This causes a problem because it is impossible to attach the data of the photographed image to the MMS message.

### SUMMARY OF THE INVENTION

Accordingly, the present invention addresses at least the above-mentioned problems and disadvantages. An object of the present invention is to provide a method for photographing an image to be attached to a message with a size within an available data attachment capacity, and transmitting the data of the photographed image by attaching the data to the message.

Another object of the present invention is to provide a method for photographing an image to be attached to a message, adjusting the pixels of the data of the photographed image according to an available data attachment capacity, and transmitting the photographed image data by attaching the data to the message.

To accomplish these objects, in accordance with one aspect of the present invention, a method for transmitting a message in a wireless terminal is provided. The method comprises the steps of checking a size of message contents to be transmitted when the message contents are input in a message writing mode, calculating an available data attachment capacity based on the size of the message contents, photographing an image to be attached to the message with a size within the available data attachment capacity and attaching the photographed image to the message, and transmitting the message with the attached image when a transmission key is operated.

In accordance with another aspect of the present invention, a method for transmitting a message in a wireless terminal is provided. The method comprises the steps of checking a size of input message contents to be transmitted when the message contents are input in a message writing mode, calculating an available data attachment capacity based on the size of the message contents, checking a size occupied by pixels of a photographed still picture when photographing the still picture to be attached to the message, adjusting a number of pixels used for the photographed still picture to be suitable for the available data attachment capacity, attaching the still picture to the message, and transmitting the message with the attached still picture when a transmission key is operated.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating the construction of a wireless terminal according to an exemplary embodiment of the present invention;
FIGs. 2A and 2B are flowcharts illustrating a method for transmitting a message with attached image data according to an exemplary embodiment of the present invention; and
FIG. 3 is a flowchart illustrating a procedure for transmitting a message with attached still picture data, which is used in FIG. 2A, according to an exemplary embodiment of the present invention.

Throughout the drawings, like reference numerals will be understood to refer to like parts, components and structures.

### DETAILED DESCRIPTION OF EXEMPLARY EMBODIMENTS

Hereinafter, exemplary embodiments of the present invention will be described with reference to the accompanying drawings. In the following description of the embodiments of the present invention, a detailed description of known functions and configurations incorporated herein will be omitted for clarity and conciseness.

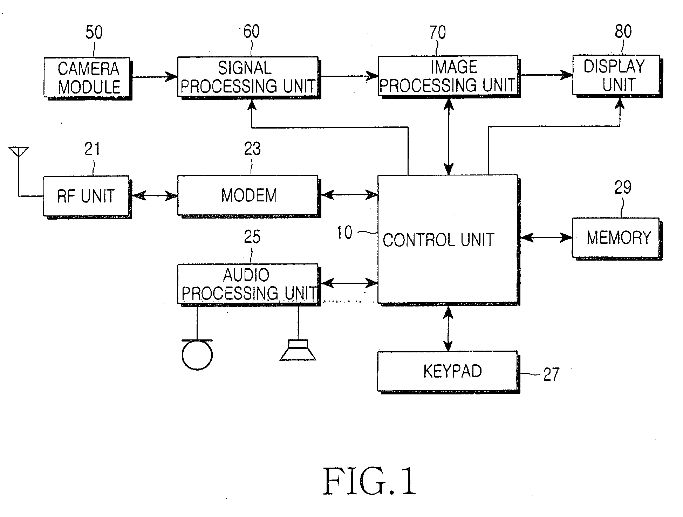

FIG. 1 is a block diagram illustrating the construction of a wireless terminal according to an embodiment of the present invention. An RF (Radio Frequency) unit 21 performs transmission and reception function of the wireless terminal. The RF unit 21 comprises an RF transmitter and an RF receiver. The RF transmitter up-converts a frequency of a signal to be transmitted and amplifies the signal. The RF receiver low-noise amplifies a received signal and down-converts a frequency of the received signal.

A modem 23 comprises a transmitter for encoding and modulating the signal to be transmitted, and a receiver for demodulating and decoding the received signal.

An audio processing unit 25 may comprise a codec, which has a data codec for processing packet data or the like, and an audio codec for processing audio signals such as a voice. The audio processing unit 25 converts the digital audio signals received in the modem 23 into analog signals through the audio codec for reproduction of the digital audio signals. The audio processing unit 25 also converts transmission analog audio signals generated from a microphone into digital audio signals through the audio codec and transmits the converted digital audio signals to the modem 23. The codec may be separately provided or may be included in a control unit 10.

A keypad 27 comprises keys for inputting numeral and character information and function keys for setting various functions. Also, the keypad 27 may comprise an attached-message execution key, a photographing key, a selection key, and the like according to an exemplary embodiment of the present invention.

A memory 29 may comprise a program memory and a data memory. The program memory stores programs for controlling the general operation of the wireless terminal. Also, the data memory temporarily stores data generated in the course of executing the programs. In addition, according to an exemplary embodiment of the present invention, the program memory stores the general program required for writing and transmitting an attachment message.

The control unit 10 controls the entire operation of the wireless terminal. The control unit 10 may comprise the modem 23 and/or the codec. According to an exemplary embodiment of the present invention, when message contents to be transmitted are input in a message writing mode, the control unit 10 detects the size of the input message contents and calculates the available data attachment capacity. Then, upon photographing of an image to be attached to the message, the control unit 10 causes the image to be photographed with a size within the available data attachment capacity and the photographed image is attached to the message. Next, when a transmission key is operated, the message is transmitted with the image attached thereto. Meanwhile, when a still picture to be attached to a message is photographed, the control unit 10 detects a size occupied by the pixels used for the photographed still picture, and adjusts the number of pixels used for the photographed still picture to have a size within an available data attachment capacity.

A camera module 50 obtains image data by photographing an image and comprises a camera sensor for converting an optical signal obtained by photographing into an electrical signal. Herein, the camera sensor may comprise a charge-coupled device (CCD) sensor.

A signal processing unit 60 receives a video signal output from the camera module 50, and converts the received video signal into an image signal. The signal processing unit 60 may comprise a digital signal processor (DSP).

An image processing unit 70 generates screen data for displaying an image signal output from the signal processing unit 60. The image processing unit 70 transmits an image signal, which has been received under the control of the control unit 10, according to the size of a display unit 80, and also compresses or decompresses the image data. Also, the image processing unit 70 transmits a start address value of image data to be output to the display unit 80, and also changes, sets and transmits the start address value under the control of the control unit 10.

The display unit 80 displays image data output from the image processing unit 70. Herein, the display unit 80 may utilize a liquid crystal display (LCD). In this case, the display unit 80 may comprise an LCD controller, a memory for storing image data, an LCD display element, and the like. When an LCD employing a touch screen scheme is used, the keypad 27 and the LCD may be an input section. The display unit 80 comprises an image data display unit to output image data.

The operation of the wireless terminal will now be described with reference to FIG. 1. In the case of an outgoing mode, when a user selects an outgoing mode after performing a dialing operation by using the keypad 27, the control unit 10 detects it, processes the received dial information through the modem 23, converts the dial information into an RF signal through the RF unit 21, and then outputs the converted RF signal. Thereafter, when a response signal is generated from a called subscriber, the control unit 10 detects the response signal through the RF unit 21 and the modem 23. Then, a voice communication channel is formed by the audio processing unit 25, so that it becomes possible for the user to communicate with the called subscriber. Also, in the case of an incoming mode, the control unit 10 detects that the wireless terminal is in the incoming mode by the modem 23, and generates a ring signal by the audio processing unit 25. Thereafter, when the user selects a response to the ring signal, the control unit 10 detects it, and forms a voice communication channel by using the audio processing unit 25, so that it becomes possible for the user to communicate with a calling subscriber. While voice communication has been described as an example in the outgoing mode and incoming mode, it will be understood that the operation may also be applied to the communication of packet data and image data. Also, during a waiting mode or a character communication mode, the control unit 10 displays character data processed by the modem 23 on the display unit 80.

The operation of photographing an image to be attached to a message with a size within the available data attachment capacity, attaching the data of the photographed image to the message, and transmitting the message with the attached image data will now be described. When the user operates a message (MMS message) key by using the keypad 27, the control unit 10 enters a message writing mode. Then, when the user inputs message contents to be transmitted by means of the keypad 27, the control unit 10 controls the memory 29 in such a manner that the control unit 10 determines the size of the input message contents and calculates the available data attachment capacity by using the size of the input message contents and the total memory capacity available for transmission. Next, when the user operates a camera mode key by using the keypad 27 in order to photograph an image to be attached to the message, the control unit 10 causes the camera to photograph an image with a size within the available data attachment capacity, and attaches the photographed image to the message. Thereafter, when a transmission key is operated, the message is transmitted with the image attached thereto.

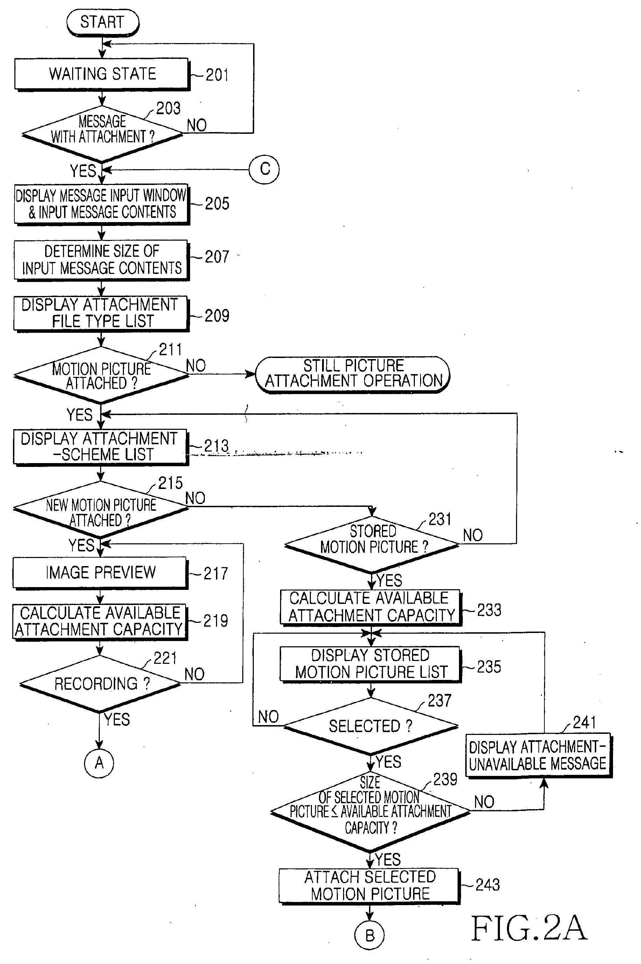

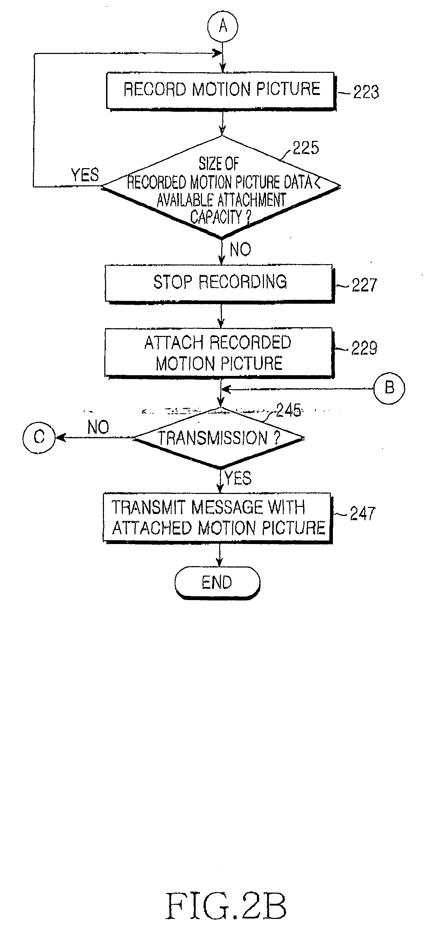

FIGs. 2A and 2B are flowcharts illustrating a method for transmitting a message with attached image data according to an exemplary embodiment of the present invention. When the user operates an attachment-message (MMS message) key by using the keypad 27 in step 201, which is in a waiting state, the control unit 10 detects it in step 203, and controls the memory 29 and display unit 80 so as to display a message input window in step 205. When the user inputs message contents to be transmitted by using the keypad 27, the control unit 10 performs step 207 of determining the size (in this case, the number of bytes) of the input message contents. For example, two bytes are used when one phonemic symbol of Korean language is input, and one byte is used when one character of the Latin alphabet is input.

In step 209, the control unit 10 controls the memory 29 and the display unit 80 so as to display an attachment file type list as shown in Table 1.

**Table 1**

| | Attachment File Type List |
|---|---|
| 1 | Motion Picture Attachment |
| 2 | Still Picture Attachment |

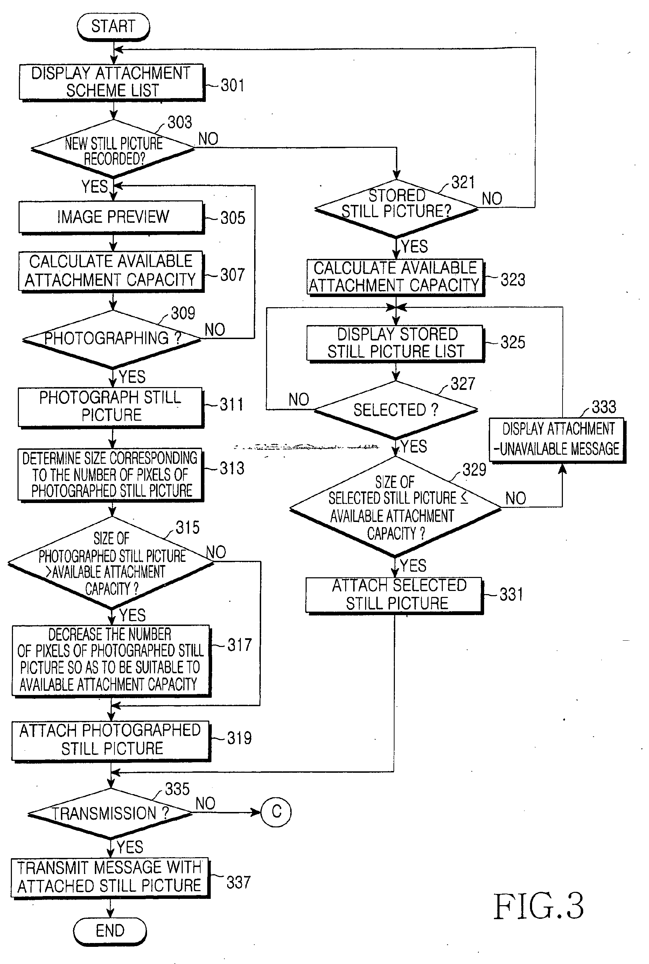

When the user selects the "Motion Picture Attachment" (first item) from the attachment file type list as shown in Table 1 by using the keypad 27, the control unit 10 detects it in step 211, and proceeds to step 213 in which the control unit 10 displays an attachment-scheme menu list as shown in Table 2. In contrast, when the user selects the "Still Picture Attachment" (second item) by using the keypad 27, the control unit 10 detects it in step 211, and executes a still picture attachment operation. The still picture attachment operation will later be described in detail below with reference to FIG. 3.

**Table 2**

| | Motion-Picture Attachment-Scheme Menu List |
|---|---|
| 1 | New Motion Picture Recording |
| 2 | Stored Motion Picture |

When the user selects the "New Motion Picture Recording" (first, item) from the motion-picture attachment-scheme menu list shown in Table 2 by using the keypad 27, the control unit 10 detects it in step 215, and proceeds to step 217. In step 217, the control unit 10 enters a preview mode, and converts a motion picture signal (which is an optical signal for a motion picture input to the camera 50) into motion picture data, thereby displaying the input motion picture through the display unit 80. In step 219, the control unit 10 controls the memory 29 such that the control unit 10 checks the total memory capacity available for transmission, and calculates the available data attachment capacity by subtracting the capacity of the input message contents from the total memory capacity available for transmission. When the user operates a photographing key by using the keypad 27, the control unit 10 detects it in step 221, and proceeds to step 223, thereby recording a motion picture. In the course of the recording of the motion picture, the control unit 10 proceeds to step 225, in which the control unit 10 compares the data size of the recorded motion picture with the calculated available data attachment capacity. When the data size of the recorded motion picture is less than the calculated available data attachment capacity, the control unit 10 returns to step 223, so as to continue the photographing. It goes without saying that the photographing ends when an end key is operated.

In contrast, when the data size of the recorded motion picture becomes equal to the calculated available data attachment capacity, the control unit 10 ends the photographing in step 227, and attaches the recorded motion picture to the message in step 229.

Meanwhile, when the user selects the "Stored Motion Picture" (second item in Table 2) by using the keypad 27, the control unit 10 detects it in step 231, and proceeds to step 233. In step 233, the control unit 10 controls the memory 29 such that the control unit 10 checks the total memory capacity available for transmission, and calculates the available data attachment capacity by subtracting the size of the input message contents from the total memory capacity available for transmission. In step 235, the control unit 10 controls the memory 29 and the display unit 80 so as to display a stored motion picture list. When the user selects a motion picture desired for attachment by using the keypad 27, the control unit 10 detects it in step 237, and performs step 239 in which the control unit 10 compares the data size of the selected motion picture with the calculated available data attachment capacity. When the data size of the selected motion picture is greater than the calculated available data attachment capacity, the control unit 10 proceeds to step 241, in which the control unit 10 controls the display unit 80 so as to display an attachment-unavailable message. The attachment-unavailable message may be displayed as a text, an image or a voice. However, when the data size of the selected motion picture is equal to or less than the calculated available data attachment capacity, the control unit 10 proceeds to step 243, in which the control unit 10 attaches the selected motion picture to the message.

Thereafter, when the user operates a transmission key by using the keypad 27, the control unit 10 detects it in step 245, and controls the RF unit 21 in step 247 so as to transmit the configured attachment message (MMS message).

FIG. 3 is a flowchart illustrating the procedure for transmitting a message with attached still picture data, which is used in FIG. 2A. The operation of transmitting a message with attached still picture data when the "Still Picture Attachment" item is selected from the attachment file type list will now be described with reference to FIG. 3. When the user selects the "Still Picture Attachment" (second item) from the attachment file type list shown in Table 1 by using the keypad 27, the control unit 10 proceeds to step 301, in which the control unit 10 controls the memory 29 and display unit 80 so as to display a still-picture attachment-scheme menu list as shown in Table 3.

**Table 3**

| | Still-Picture Attachment-Scheme Menu List |
|---|---|
| 1 | New Still Picture Photographing |
| 2 | Stored Still Picture |

When the user selects the "New Still Picture Photographing" (first item) from the still-picture attachment-scheme menu list shown in Table 3 by using the keypad 27, the control unit 10 detects it in step 303, and proceeds to step 305. In step 305, the control unit 10 enters a preview mode, and converts an image signal. (which is an optical signal for a still picture input to the camera 50) into image data, thereby displaying the input still picture through the display unit 80. In step 307, the control unit 10 controls the memory 29 such that the control unit 10 determines the total memory capacity available for transmission, and calculates the available data attachment capacity by subtracting the size of the input message contents from the total memory capacity available for transmission. When the user operates a photographing key by using the keypad 27, the control unit 10 detects it in step 309, and proceeds to step 311, thereby photographing a still picture. In step 313, the control unit 10 determines a size corresponding to the number of pixels of the photographed still picture. For example, the size of a file having one million pixels is 2929 Kb.

In step 315, the control unit 10 compares the data size of the photographed still picture with the calculated available data attachment capacity. When the data size of the photographed still picture is less than or equal to the calculated available data attachment capacity, the control unit 10 proceeds to step 319, in which the control unit 10 attaches the photographed still picture to the message. In contrast, when the data size of the photographed still picture is greater than the calculated available data attachment capacity, the control unit 10 proceeds to step 317. In step 317, the control unit 10 resizes the photographed still picture to have a size within the calculated available data attachment capacity in step 317. Next, the control unit 10 performs step 319 of attaching the photographed still picture to the message.

Meanwhile, when the user selects the "Stored Still Picture" (second item in Table 3) by using the keypad 27, the control unit 10 detects it in step 321, and proceeds to step 323. In step 323, the control unit 10 controls the memory 29 such that the control unit 10 determines the total memory capacity available for transmission, and calculates the available data attachment capacity by subtracting the size of the input message contents from the total memory capacity available for transmission. In step 325, the control unit 10 controls the memory 29 and the display unit 80 so as to display a stored still picture list. When the user selects a still picture desired for attachment by using the keypad 27, the control unit 10 detects it in step 327, and performs step 329 in which the control unit 10 compares the data size of the selected still picture with the calculated available data attachment capacity. When the data size of the selected still picture is greater than the calculated available data attachment capacity, the control unit 10 proceeds to step 333, in which the control unit 10 controls the display unit 80 so as to display an attachment-unavailable message. The attachment-unavailable message may be displayed as a text, an image or a voice. However, when the data size of the selected still picture is equal to or less than the calculated available data attachment capacity, the control unit 10 proceeds to step 331, in which the control unit 10 attaches the selected still picture to the message.

Thereafter, when the user operates a transmission key by using the keypad 27, the control unit 10 detects it in step 335, and controls the RF unit 21 in step 337 so as to transmit the configured attachment message.

According to exemplary embodiments of the present invention as described above, since the wireless terminal photographs or records an image to be attached to a message within the available data attachment capacity, it is always possible to transmit the photographed/recorded image with a transmission message, to which the photographed/recorded image is attached, even though the user does not know the available data attachment capacity. Therefore, the method of exemplary embodiments of the present invention can greatly improve subscriber convenience.

While the present invention has been shown and described with reference to certain preferred embodiments thereof, it will be understood by those skilled in the art that various changes in form and details may be made therein without departing from the spirit and scope of the invention as defined by the appended claims. Particularly, while in the exemplary embodiments of the present invention a motion picture or still picture is attached to an MMS message when the data size of the motion picture or still picture is less than or equal to the available data attachment capacity, the motion picture or still picture may be attached to the MMS message when a transmission key is operated. Accordingly, the scope of the invention is not to be limited by the above embodiments but only by the claims and equivalents thereof.

## Claims

1. A method for transmitting a message in a wireless terminal, the method comprising the steps of:
determining a size of message contents to be transmitted when the message contents are input in a message writing mode;
calculating an available data attachment capacity based on the size of the message contents;
photographing an image to be attached to the message with a size within the available data attachment capacity;
attaching the photographed image to the message; and
transmitting the message with the attached image when a transmission key
is operated.

2. The method as claimed in claim 1, wherein the calculating step comprises the sub-steps of:
determining a total capacity available for transmission; and
obtaining the available data attachment capacity by subtracting the size of the message contents from the total capacity available for transmission.

3. The method as claimed in claim 1, wherein the photographing step comprises the steps of:
determining a size of photographed image's data during a photographing operation for the image;
comparing the size of the photographed image's data with the available data attachment capacity;
continuing the photographing operation when the size of the photographed image's data is less than the available data attachment capacity; and
stopping the photographing operation when the size of the photographed image's data is equal to the available data attachment capacity.

4. The method as claimed in claim 1, wherein the image's data comprises motion picture data.

5. The method as claimed in claim 1, wherein the message comprises a multimedia messaging service (MMS) message.

6. A method for transmitting a message in a wireless terminal, the method comprising the steps of:
determining a size of input message contents to be transmitted when the message contents are input in a message writing mode;
calculating an available data attachment capacity based on the size of the message contents;
checking a size occupied by pixels of a photographed still picture when photographing the still picture to be attached to the message;
adjusting a number of pixels used for the photographed still picture to be suitable for the available data attachment capacity;
attaching the still picture to the message; and
transmitting the message with the attached still picture when a transmission key is operated.

7. The method as claimed in claim 6, wherein the calculating step comprises the sub-steps of:
determining a total capacity available for transmission; and
obtaining the available data attachment capacity by subtracting the size of the message contents from the total capacity available for transmission.

8. The method as claimed in claim 6, wherein the adjusting step comprises the steps of:
determining a size of the photographed still picture's data during a photographing operation for the still picture;
comparing a size occupied by pixels used for data of the photographed still picture with the available data attachment capacity;
storing the photographed still picture's data when the size occupied by pixels used for the photographed still picture's data is equal to or less than the available data attachment capacity; and
performing a resizing operation, with respect to the number of pixels used for the photographed still picture's data, so as to be suitable to the available data attachment capacity, when the size occupied by pixels used for the photographed still picture's data is greater than the available data attachment capacity.

9. The method as claimed in claim 6, wherein the message comprises a multimedia messaging service (MMS) message.
